# EUROPÄISCHE PATENTSCHRIFT

(11) **EP 2 666 694 B1**
(45) Veröffentlichungstag und Bekanntmachung des Hinweises auf die Patenterteilung: **02.07.2014**
(21) Anmeldenummer: 13168734.5
(22) Anmeldetag: 22.05.2013
(51) Int. Cl.: B61B 5/00, B61B 13/04

(54) **Modulares Zustellsystem**
Modular delivery system
Système d'avance modulaire

(30) Priorität: 25.05.2012 DE 102012104539
(43) Veröffentlichungstag der Anmeldung: 27.11.2013
(73) Patentinhaber: Askion GmbH, 07549 Gera (DE)
(72) Erfinder: Bürgermeister, Daniel, 08058 Zwickau (DE); Kästner, Andreas, 07570 Burkersdorf (DE)
(74) Vertreter: Oehmke, Volker

(56) Entgegenhaltungen:
- AU-B2- 608 089
- DE-A1-102006 049 588
- DE-A1-102008 032 151
- DE-T5-112008 001 754
- US-B1- 6 308 818

## Beschreibung

Die Erfindung betrifft ein modulares Zustellsystem zur Zustellung von Objekten an mindestens eine Endposition unter Nutzung eines Schienensystems, wie dies gattungsgemäß aus der DE 10 2008 032151 A1 bekannt ist.

Zustellsysteme sind beispielsweise zur Verwendung bei der Herstellung, Montage oder Verpackung von Produkten oder bei der Lagerhaltung von Objekten wie z. B. von Werkzeugen, Verbrauchsmitteln oder Waren bekannt.

Sehr günstig ist es dabei, wenn das Zustellsystem modular aufgebaut ist, so dass das Zustellsystem leicht an verschiedene örtliche Gegebenheiten, kapazitive Auslastungen und sonstige veränderte Anforderungen anpassbar ist.

Aus der US 6,308,818 B1 ist ein weiteres modulares Zustellsystem bekannt, das wenigstens eine Führungsschiene und entlang der Führungsschiene verfahrbare Wagen beinhaltet. Jeder Wagen ist wenigstens einer Zustellposition der Führungsschiene zustellbar. Ausgehend von der Zustellposition ist der ganze Wagen einem Arbeitsplatz (fortan: Endposition) zustellbar, indem er von der Führungsschiene entfernt und über eine Zustellstation zur Endposition transportiert wird. An der Endposition ist der Wagen mit den zu transportierenden Objekten beladbar oder transportierte Objekte sind von dem Wagen entladbar. Durch normierte, modular anordenbare Führungsschienenabschnitte, Weichen und Kurven ist das modulare Zustellsystem an unterschiedlichste räumliche Gegebenheiten anzupassen. Der Antrieb der Wagen erfolgt über ein System von gesteuert antreibbaren Rädern, die in einer der Führungsschienen integriert sind.

Nachteilig an dem beschriebenen Zustellsystem ist, dass ein Wagen während des Be- und Entladens an der Endposition verbleiben muss und nicht anderweitig zur Verfügung steht. Auch ist das in der US 6,308,818 B1 offenbarte modulare Zustellsystem nicht für einen Transport und eine Zustellung gekühlter, insbesondere tiefgekühlter Proben, z. B. für medizinische Zwecke, geeignet, da eine Aufrechterhaltung der Kühlkette nicht gewährleistet ist.

Ein Verfahren und eine Vorrichtung zur Verbesserung der Auslastung eines Zustellsystems ist in der DE 11 2008 001 754 T2 beschrieben. Die Erfindung betrifft ein Einschienenbahnsystem, auf dem Vehikel (Wagen) gesteuert verfahren werden können. Auf den Wagen werden Werkzeugträger (fortan Zustelltisch) transportiert, die an bestimmten Ablageaustauschpunkten abgelegt und an Aufnahmeaustauschpunkten von dem Wagen aufgenommen werden können. Die Wagen sind nicht an bestimmte Ablage- bzw. Aufnahmeaustauschpunkte gebunden und können sehr flexibel innerhalb des Zustellsystems angesteuert und eingesetzt werden.

Um Havarien vorzubeugen und um einen weitestgehend störungsfreien Betrieb des Zustellsystems zu erlauben, ist es erforderlich, die Zustelltische während einer Verfahrbewegung zu sichern. Soll der Zustelltisch von dem Wagen abgenommen werden, muss der Zustelltisch zuverlässig entsichert sein, um Beschädigungen und Betriebsstörungen zu vermeiden.

Der Erfindung liegt die Aufgabe zugrunde, ein modulares Zustellsystem vorzuschlagen, welches eine gegenüber dem Stand der Technik verbesserte Flexibilität in der Verfügbarkeit der Wagen sowie eine breitere Palette zustellbarer Objekte aufweist und durch welches zudem in einfacher und zuverlässiger Weise die Zustelltische auf den Wagen gesichert bzw. entsichert werden.

Die Aufgabe wird durch ein modulares Zustellsystem gelöst, das eine Führungsschiene, der mindestens eine Zustellstation zur Zustellung eines Objektes an eine Endposition zugeordnet ist, sowie einen entlang der Führungsschiene verfahrbaren Wagen zum Transport eines Objektes beinhaltet. Dabei ist durch jede zugeordnete Zustellstation eine Zustellposition des Wagens bestimmt und der Wagen ist wiederholt mindestens einer der Zustellpositionen zustellbar.

Der Wagen weist einen horizontal auf- und abnehmbaren Zustelltisch auf, wobei der Zustelltisch von jeder Zustellposition an die zugeordnete Endposition und von jeder Endposition an die zugeordnete Zustellposition übertragbar ist. Ein erfindungsgemäßes modulares Zustellsystem ist dadurch gekennzeichnet, dass der Wagen ein Verriegelungselement zur Verriegelung des Zustelltisches an dem Wagen aufweist, wobei das Verriegelungselement ein um seine Mittelachse drehbares Malteserkreuz mit vier sich gegenüberliegenden Armen und vier sich gegenüberliegenden Schlitzen ist, wobei zwei sich gegenüberliegende Arme in radialer Richtung mit einem Überstand über die anderen Arme ragend ausgebildet sind und dass die Zustellstation mindestens zwei Schaltelemente zum Schalten des Malteserkreuzes aufweist, wobei ein erstes Schaltelement als ein in jeweils einen der Schlitze des Malteserkreuzes eingreifbar angeordneter Bolzen und ein zweites Schaltelement als ein Element ausgebildet ist, gegen das einer der Überstände während einer Verfahrbewegung des Wagens so anfahrbar ist, dass eine Drehung des Malteserkreuzes um eine Viertelumdrehung bewirkt ist.

Die Führungsschiene kann aus einer oder mehreren Einzelschienen bestehen, wobei mehrere Einzelschienen unterschiedlich gestaltet sein können. Vorzugsweise ist nur eine durch eine Einzelschiene gebildete Führungsschiene vorhanden. Die Länge und der tatsächliche Verlauf der Führungsschiene sind an den jeweiligen Einsatzort und Verwendungszweck anpassbar. Die Führungsschiene besteht vorzugsweise aus einzelnen Abschnitten, die verschieden, z. B. als Kurven unterschiedlicher Radien, geformt und je nach Bedarf zusammengefügt sein können. Durch die Führungsschiene sind verschiedene Räume, Etagen und Gebäude sowie verschiedene Geräte und Arbeitsplätze miteinander verbindbar. Durch die Führungsschiene können auch komplexe Systeme aus Führungsschienen, z. B. mit Schleifen, Querverbindungen mit Weichen oder verschiedene vertikale Fahrebenen gebildet sein.

Eine Zustellposition kann jeder Ort entlang der Führungsschiene sein, an den ein Wagen zustellbar ist. Ein Vorteil des erfindungsgemäßen modularen Zustellsystems ist, dass mindestens eine Zustellstation entsprechend einem tatsächlichen Bedarf und unter Beachtung der räumlichen Gegebenheiten neben der Führungsschiene anordenbar ist. Durch die frei wählbare Positionierung der Zustellstation neben der Führungsschiene ist die Zustellposition dieser Zustellstation festgelegt. Ein Wagen muss an die Zustellposition zugestellt sein, um eine Übertragung des Zustelltisches an die Endposition oder einen Empfang des Zustelltisches von der Endposition zu erlauben. Die Zustellstation ist vorzugsweise senkrecht zur Führungsschiene ausgerichtet. In weiteren Ausführungen des erfindungsgemäßen modularen Zustellsystems kann die Zustellstation aber auch unter einem Winkel ungleich 90° angeordnet sein.

Der Zustelltisch ist vorzugsweise horizontal von dem Wagen heruntergezogen oder - geschoben und auf diesen aufgeschoben oder -gezogen. Der Zustelltisch kann auch durch eine Sequenz von Schieben und Ziehen verschoben sein. Der Zustelltisch ist vorzugsweise so auf dem Wagen aufgestellt (aufgenommen), dass er senkrecht zur Führungsschiene von dem Wagen abnehmbar, beispielsweise herunterziehbar, ist, wobei eine Anordnung unter einem Winkel ungleich 90° realisiert sein kann.

Die Zustellstation weist mindestens eine Zustellbahn zur Führung des Zustelltisches und ein gesteuert antreibbares Transportband mit mindestens einem Mitnehmer zur Verschiebung des Zustelltisches entlang der Zustellbahn auf. Dabei ist mindestens einer der Mitnehmer gegen einen ersten Anschlag des Zustelltisches und mindestens ein Mitnehmer gegen einen zweiten Anschlag des Zustelltisches bewegbar. Durch einen gegen den ersten oder zweiten Anschlag bewegten Mitnehmer ist der Zustelltisch entlang der Zustellrichtung verschiebbar. Es ist eine bevorzugte Ausführung des Zustelltisches, wenn der Zustelltisch jeweils einen ersten und einen zweiten Anschlag an seinem in Zustellrichtung vorderen und hinteren Ende aufweist.

Das Transportband ist in einer einfachen Ausführung als ein umlaufendes Band ausgebildet. Es kann in weiteren Ausführungen beispielsweise auch als endliches Band, als Kette, Seilzug oder durch ein anderes Fördersystem gebildet sein.

Durch einen Bereich der Zustellstation ist die Endposition gebildet. Die Endposition ist eine Position des Zustelltisches, an der ein Objekt auf dem Zustelltisch abstellbar oder von diesem entfernbar ist. Ein solches Objekt kann beispielsweise ein thermisch isolierter, vorzugsweise ein gegen Wärmeverlust isolierter, Behälter sein. Als Objekte im Sinne der Anmeldung sind alle Gegenstände zu verstehen, die auf dem Zustelltisch abstellbar und durch diesen transportierbar sind. Objekte können zusammengesetzt sein, z. B. ein Behälter mit einem Deckel, oder frei miteinander kombinierbar sein, z. B. in einen Behälter einleg-, einsteck- oder einhängbare Probengefäße, Werkstücke oder Halbzeuge. Auch sind Endpositionen solche Positionierungen des Zustelltisches, an denen weitere Objekte, z. B. Probengefäße, in das auf dem Zustelltisch abstellbare Objekt gegeben werden können oder aus diesem entnehmbar sind. An den Endpositionen können verschiedene Vorrichtungen wie beispielsweise Probenlager, Prüfgeräte oder Vorrichtungen zur Prozessierung der Proben (z. B. Sequenzierer, PCR-Geräte) vorhanden sein. Die Endposition ist vorzugsweise ein Abschnitt der Zustellbahn.

Der Wagen kann ein eigenes Antriebssystem, z. B. einen elektrischen Antrieb, aufweisen. Er kann auch durch ein Antriebssystem angetrieben sein, das außerhalb des Wagens angeordnet, z. B. wie aus dem Stand der Technik bekannt, in die Führungsschiene integriert ist.

Durch eine Verriegelung ist der Zustelltisch insbesondere bei Fahrbewegungen des Wagens sicher an dem Wagen gehalten.

In weiteren Ausführungen des erfindungsgemäßen modularen Zustellsystems kann das Verriegelungselement an dem Zustelltisch oder an Zustelltisch und Wagen angeordnet sein.

Die Schaltelemente sind vorzugsweise der Zustellstation zugehörig und sind mit dieser entlang der Führungsschiene anordenbar.

Durch das zweite Schaltelement ist das Malteserkreuz nur dann geschaltet, wenn einer der längeren Arme so ausgerichtet ist, dass sein Überstand an das zweite Schaltelement anfahrbar ausgerichtet ist. Das zweite Schaltelement ist so positioniert, dass das Malteserkreuz, wenn die kurzen Arme vertikal ausgerichtet sind, an dem zweiten Schaltelement berührungsfrei vorbeigeführt ist. Sind dagegen die Überstände vertikal ausgerichtet, gelangt einer dieser Überstände bei einer Vorbeifahrt des Wagens an dem zweiten Schaltelement mit diesem in Berührung.

Das zweite Schaltelement kann beispielsweise ebenfalls ein Bolzen, eine horizontal ausgerichtete Platte oder mehrere auf einer Höhe nebeneinander angeordnete Bolzen oder Stifte sein. Durch eine Platte oder durch nebeneinander angeordnete Bolzen oder Stifte ist eine Verdrehung des Malteserkreuzes um mehr als eine Viertelumdrehung verhindert.

Das erste und zweite Schaltelement sind vorzugsweise so angeordnet, dass der Wagen vor dem Erreichen der Zustellposition die beiden Schaltelemente passiert. Dabei sind vorzugsweise in Richtung der Fahrbewegung des Wagens nacheinander das erste Schaltelement und dann das zweite Schaltelement angeordnet. Das zweite Schaltelement kann auch in der Zustellposition angeordnet sein, wobei der zugehörige Schaltvorgang bei Erreichen der Zustellposition durch den Wagen abgeschlossen sein muss.

Durch das modifizierte Malteserkreuz sowie durch das erste und zweite Schaltelement ist ein Malteserkreuzgetriebe gebildet, durch welches gewährleistet ist, dass der Zustelltisch die Zustellposition immer in einem unverriegelten Zustand erreicht, unabhängig davon, ob der Zustelltisch vorher im verriegelten oder unverriegelten Zustand vorlag. So können auch fehlerhafte Verriegelungszustände korrigiert werden.

Es ist äußerst vorteilhaft, wenn auf eine Anordnung eines ersten Schaltelements und eines zweiten Schaltelements wiederum ein zweites Schaltelement und ein weiteres erstes Schaltelement folgt. Dabei ist je ein erstes und ein zweites Schaltelement auf jeder Seite der Zustellposition angeordnet, wobei jeweils das zweite Schaltelement näher an der Zustellposition angeordnet ist als das erste Schaltelement. Durch eine solche Anordnung von insgesamt vier Schaltelementen ist ein Wagen von verschiedenen Richtungen der Zustellposition zustellbar. So kann die Zustellposition beispielsweise inmitten der Führungsschiene festgelegt sein. Dieser Zustellposition ist der Wagen von beiden Seiten her zustellbar, wodurch die Zeiten für eine Zustellung gering gehalten und die vorhandenen Wagen effizient nutzbar sind. Durch die Anordnung von vier Schaltelementen erreicht der Wagen die Zustellposition immer im entriegelten Zustand und liegt nach dem Passieren der Anordnung der Schaltelemente immer im verriegelten Zustand vor und zwar unabhängig von seinem vorherigen Verriegelungszustand. Unter einem verriegelten Zustand ist zu verstehen, dass die langen Arme vertikal ausgerichtet sind. Ist der Zustelltisch auf dem Wagen vorhanden, so ist dieser durch das Verriegelungselement an dem Wagen gegen ein Abnehmen gehalten. Entsprechend liegt ein entriegelter Zustand vor, wenn die kurzen Arme in vertikaler Ausrichtung stehen.

Das Schalten des Verriegelungselements erfolgt aber auch dann, wenn das Verriegelungselement an dem Wagen angeordnet ist und der Wagen ohne Zustelltisch verfahren ist.

Der Zustelltisch kann Fahrelemente wie z. B. Räder, Rollen oder Walzen aufweisen, auf denen dieser auf der Zustellbahn rollt. Die Anordnung der Fahrelemente ist in einer vorteilhaften Ausführung so gewählt, dass ein möglicherweise zwischen dem Wagen und der Zustellbahn vorhandener und montagebedingter Spalt überbrückbar ist, ohne dass der Wagen aus einer vorgesehenen, z. B. horizontalen, Lage herauskippt. So können an dem Zustelltisch mindestens drei Fahrelemente vorhanden sein, deren Abstände so gewählt sind, dass der Masseschwerpunkt des Zustelltisches vorzugsweise über der Achse des mittleren Fahrelements liegt und die Abstände zwischen der Achse des mittleren Fahrelements und den jeweiligen Achsen der anderen Fahrelemente größer als der Spalt sind. Durch eine solche Anordnung der Fahrelemente ist ein Aufstehen von immer mindestens je zwei Fahrelementen gewährleistet und ein Kippen des Zustelltisches ist vermieden. In einer bevorzugten Ausführung des Zustelltisches weist dieser an zwei seiner Seiten je vier Räder als Fahrelemente auf. Der gegebenenfalls vorhandene Spalt ist bei der Zustellung des Zustelltisches von einem an der Zustellposition befindlichen Wagen zur Endposition sowie bei einer Zustellung von der Endposition zurück auf den Wagen zu überbrücken. Durch die beschriebene Anordnung der Fahrelemente ist es möglich, bei einer Montage des modularen Zustellsystems Spalten mit unterschiedlichen Breiten zu erlauben. Dadurch ist der Einsatz normierter Teile der Zustellbahn erleichtert, ohne dass in aufwändiger Justage und Spezialanfertigung exakt passende Anbindungen zwischen Führungsschiene, Wagen und Zustellbahn erforderlich sind, wodurch eine höhere Flexibilität des modularen Zustellsystems erreicht ist.

In einer weiteren Ausführung des erfindungsgemäßen Zustellsystems ist die Zustellbahn von einem Portal überspannt. Unter einem Portal ist in einem einfachen Fall ein die Zustellbahn überspannender Rahmen verstanden. Unter dem Portal ist der Zustelltisch durchführbar. Das Portal ist entlang einer Strecke in Zustellrichtung verschiebbar und gleichzeitig höhenverstellbar. Die Strecke ist vorzugsweise durch zwei Positionen gegeben, an die das Portal zustellbar ist. In einer bevorzugten Ausführung des Portals ist das Portal beiderseits der Zustellbahn auf einer schiefen Ebene verschiebbar gelagert. Ist die schiefe Ebene geradlinig ansteigend ausgeführt, ist das Portal je Streckenabschnitt um einen konstanten Betrag in ihrer Höhe veränderlich. Eine Beziehung zwischen zurückgelegter Strecke und überwundener Höhe ist in einem solchen Fall linear. In weiteren Ausführungen kann die Beziehung auch anders, beispielsweise sigmoidal, exponentiell oder in sonstiger Weise nichtlinear sein. Der Höhenbereich ist durch die minimal und maximal möglichen Höhen des Portals gegeben. Die Länge der Strecke sowie die Art der Beziehung von Strecke und überwundener Höhe ist vorzugsweise so gewählt, dass ein gewünschter Höhenbereich überwindbar ist.

In einer vorteilhaften, weil ohne zusätzlichen Antrieb auskommenden, Ausführung ist das Portal durch den Zustelltisch entlang der Strecke zwangsgeführt. Dabei ist die durch das Transportband auf den Zustelltisch übertragene Antriebsleistung auch zur Verschiebung des Portals eingesetzt.

Dazu kann der Zustelltisch mindestens einen Nocken und das Portal mindestens eine Kulisse aufweisen, wobei Nocken und Kulisse so gestaltet und angeordnet sind, dass der Nocken zu Beginn der Strecke in die Kulisse eingreift und am Ende der Strecke aus der Kulisse austritt. Durch den Austritt des Nockens aus der Kulisse ist der Zustelltisch unter dem Portal hervor bewegbar und ein freier Zugang zu dem Zustelltisch und gegebenenfalls darauf transportierten Objekten gewährleistet. Die Kraftübertragung von Zustelltisch auf das Portal erfolgt von dem Nocken auf die Kulisse. Es können mehrere Nocken und Kulissen zur gleichmäßigeren sowie zur symmetrischen Krafteinleitung vorhanden sein. Die Strecke kann zusätzlich durch Anschläge des Portals begrenzt sein, durch die ein Überfahren der Strecke vermieden ist. An dem höher gelegenen Ende der Strecke können Mittel zum Halten des Portals, z. B. Magnete oder ein Rastmechanismus zwischen Portal und Anschlag, vorhanden sein.

Durch das Portal ist vorteilhaft ein auf dem Wagen befindliches Objekt oder ein Teil des Objektes anhebbar oder absenkbar, während der Wagen die Strecke zurücklegt. Am Portal kann mindestens ein Hebeelement zum Eingriff in eine Aufnahme eines mit dem Zustelltisch transportierten Objektes angeordnet sein. Das Objekt kann beispielsweise ein Deckel eines Behälters sein. Günstig ist es, wenn das Hebeelement so konstruiert ist, dass dieses bei einer Fahrbewegung des Zustelltisches in Richtung auf eine Endposition in die Aufnahme eingreift und das anzuhebende Objekt am Ende der Strecke durch das Hebeelement gehalten bleibt. Da der Zustelltisch unter dem Portal wieder herausgefahren wird, verbleibt z. B. der Deckel an dem Portal während an der Endposition ein Zugriff in das Innere des Behälters ermöglicht ist. Das Hebeelement ist vorzugsweise zur Entdeckelung eines auf dem Zustelltisch transportierten und mit einem Deckel versehenen Behälters vorhanden und verwendet.

Die Ausrichtung des Objektes auf dem Zustelltisch kann durch formschlüssige Führungen gewährleistet sein. So kann das Objekt beispielsweise eine asymmetrische Aufstandsfläche und der Zustelltisch eine entsprechende Aufnahme aufweisen. Auch kann an dem Objekt ein asymmetrischer Vorsprung vorhanden sein, der in eine Führung des Zustelltisches eingreifend gestaltet ist.

Bei einer anschließenden Fahrbewegung weg von der Endposition ist das anzuhebende Objekt durch ein erneutes Verschieben des Portals durch den Zustelltisch abgesenkt. Am Ende der Strecke tritt das Hebeelement wieder aus der Aufnahme aus und das anzuhebende Objekt ist wieder freigegeben, z. B. ist der Deckel wieder auf dem Behälter aufgesetzt und dieser verschlossen.

Der Zustelltisch kann auf der Zustellbahn, insbesondere an der Endposition, auch angehalten sein. Der Wagen ist in der Zwischenzeit anderen Zustellpositionen zustellbar. Sind mehrere Wagen vorhanden, kann der Zustelltisch an der Zustellposition an einen der anderen Wagen übergeben werden.

Als zweckmäßig hat es sich herausgestellt, wenn der Antrieb des Transportbands einen Drehmomentsensor aufweist, um zum Beispiel den Zustelltisch mit statischer Kraft gegen einen festen Endanschlag zu drücken oder bei auftretenden Fehlfunktionen oder technischen Defekten durch einen gewollten Nothalt Folgeschäden zu vermeiden.

Ein solcher Drehmomentsensor kann durch ein, bei Überschreitung eines Drehmomentschwellwerts verdrehbar gelagertes, Element gebildet sein. Das verdrehbar gelagerte Element kann ein Motor zum Antrieb des Transportbands sein. Das Element kann mit Lageschaltern in Verbindung stehen, über die bei einer Überschreitung des Drehmomentschwellwerts und einer daraufhin erfolgenden Verdrehung des Elements ein Schaltsignal abgegebenen ist, welches von der Steuerung zweckentsprechend verarbeitet wird.

Die Verdrehung des Elementes ist zunächst beispielsweise durch vorgespannte Federelemente verhindert und setzt erst ein, wenn ein Grenzmoment überschritten wird. Die Anordnung lässt sich auch mehrstufig realisieren, um zum Beispiel ein betriebsmäßiges Grenzmoment und ein Überlastmoment zu detektieren.

Es kann ferner eine Steuerung vorhanden sein, durch die das modulare Zustellsystem ansteuerbar ist, so dass ein Zustelltisch mindestens einer Endposition und mindestens einem Wagen und ein Wagen mindestens einer Zustellposition zustellbar ist. Sind eine Anzahl von Wagen, Zustelltischen sowie Zustell- und Endpositionen vorhanden, können durch eine Steuerung auch komplexe Zustellabläufe steuerbar sein. Es ist möglich, dass die Geschwindigkeiten von Wagen und Zustelltisch variierbar sind. So können längere Abschnitte der Führungsschiene bzw. der Zustellbahn mit höheren Geschwindigkeiten überwunden werden, während bei der Annäherung an Zustell- oder Endpositionen geringere Geschwindigkeiten erreicht werden.

Dazu ist es günstig, wenn jeder Wagen und/oder jeder Zustelltisch je ein Ortungselement aufweist, durch dass eine Lokalisierung des Wagens und/oder Zustelltisches ermöglicht ist. Neben einer reinen Lokalisierung können in den Ortungselementen auch für den Wagen und/oder den Zustelltisch spezifische Daten abrufbar gespeichert sein. Solche Ortungselemente können beispielsweise berührungsfrei arbeiten, wie z. B. induktiv anregbare passive Sender (z. B. sogenannte Transponder) oder Barcodes. Sie können auch so gestaltet sein, dass ein direkter Kontakt zum Auslesen sowie zum Ändern der Daten erforderlich ist. Die Ortungselemente können mit Daten beschreibbar sein, wie dies aus dem Stand der Technik allgemein bekannt ist. Entsprechende der gewählten Ortungselemente sind geeignete Lesevorrichtungen, z. B. Transponderlesegeräte oder Barcodescanner, vorhanden.

Zur Verwaltung komplexer Abläufe ist die Steuerung vorzugsweise mit einer Datenbank signaltechnisch verbunden.

Durch das ermöglichte Abnehmen und Wiederaufsetzen eines Deckels ist das erfindungsgemäße modulare Zustellsystem besonders für die Zustellung von gekühlten und tiefgekühlten Proben geeignet. Beispielsweise können medizinische, biochemische oder chemische Proben an eine Anzahl von Endpositionen zugestellt werden. Außerdem können an den Endpositionen die Proben auch bearbeitet, ausgetauscht oder nur entnommen werden. Je nach aktueller Bestückung eines Objektes mit Proben und Bedarf der Proben an verschiedenen Endpositionen, ist der Zustelltisch den jeweiligen Endpositionen zustellbar. Durch eine definierte Orientierung des Objektes ist auch die Lage von in dem Objekt vorhandenen Proben jederzeit eindeutig bestimmt, so dass eine sichere Entnahme und ein Einlegen fehlerfrei erfolgen kann. Zusätzlich können Lesegeräte zur Erfassung von Markierung der Proben, z. B. von aufgebrachten Barcodes, vorhanden sein, um die Identität einer entnommenen oder einer einzulegenden Probe zu verifizieren.

Proben können dabei beispielsweise Seren, DNS, Gewebe oder Mikrokulturen sein.

Die Erfindung wird nachfolgend anhand von Ausführungsbeispielen und Abbildungen näher erläutert. Es zeigen die Abbildungen:
- Fig. 1: eine erste Ausführung eines erfindungsgemäßen modularen Zustellsystems mit Zustellbahn und Wagen mit Zustelltisch in einer Zustellposition;
- Fig. 2: eine erste Ausführung eines erfindungsgemäßen Malteserkreuzgetriebes zur Verriegelung eines Zustelltisches;
- Fig. 3: eine erste Ausführung eines erfindungsgemäßen Malteserkreuzes;
- Fig. 4: eine erste Ausführung eines erfindungsgemäßen modularen Zustellsystems mit einem Wagen an der Zustellposition als Darstellung im Teilschnitt;
- Fig. 5: eine Ausführung eines erfindungsgemäßen Portals in einer ersten Position;
- Fig. 6: das Portal in Seitenansicht;
- Fig. 7: eine erste Ausführung eines erfindungsgemäßen modularen Zustellsystems mit Portal, Zustelltisch und Kulisse;
- Fig. 8: eine zweite Ausführung des erfindungsgemäßen modularen Zustellsystems mit einem Portal in einer ersten Position;
- Fig. 9: eine erste Ausführung eines Drehmomentsensors.

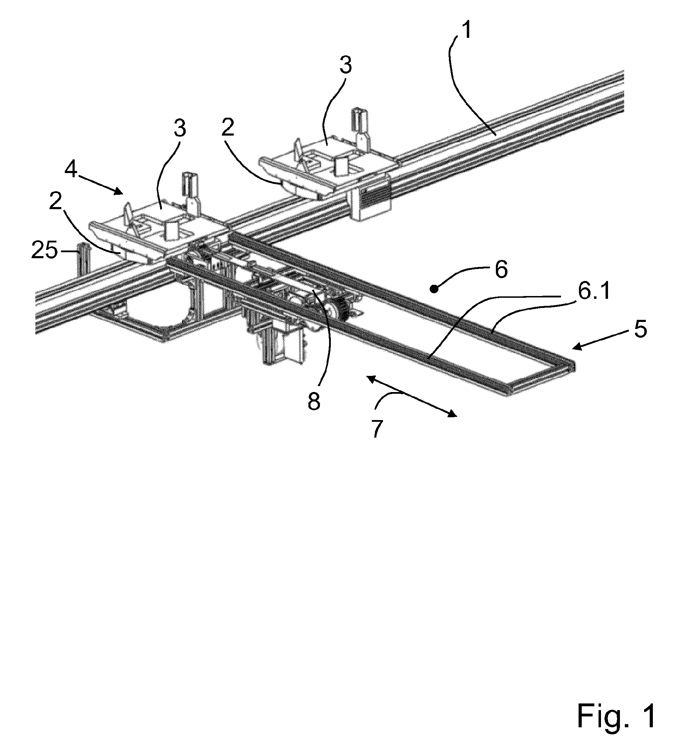

Als wesentliche Komponenten eines erfindungsgemäßen modularen Zustellsystems sind in Fig. 1 eine Führungsschiene 1, zwei Wagen 2 mit je einem Zustelltisch 3 und eine Zustellstation 6 gezeigt.

Die Wagen 2 sind zusammen mit dem auf den Wagen 2 vorhandenen Zustelltischen 3 entlang der Führungsschiene 1 verfahrbar und einer Zustellposition 4 zustellbar. Die Zustellstation 6 ist der Zustellposition 4 so zugeordnet, dass ein Zustelltisch 3 von einem in der Zustellposition 4 befindlichen Wagen 2 in einer Zustellrichtung 7 von dem Wagen 2 horizontal abnehmbar und entlang einer Zustellbahn 6.1 bis zu einer Endposition 5 fahrbar ist. Die Bewegung des Zustelltisches 3 entlang der Zustellrichtung 7 ist durch ein gesteuert angetriebenes Transportband 8 ermöglicht.

Der Wagen 2 ist mit einem eigenen elektrischen Antrieb ausgerüstet. Die Stromversorgung des Wagens 2 erfolgt über die Führungsschiene 1. Eine Kommunikation mit dem Wagen 2 ist per IR-link möglich. In weiteren Ausführungen der Erfindung kann der Wagen 2 auch mit in oder an der Führungsschiene 1 angeordneten oder integrierten Versorgungs- und Steuerleitungen in Kontakt stehen. Eine Ansteuerung des Wagens 2 ist auch durch Fernsteuerungen, insbesondere durch Funkfernsteuerung möglich. Außerdem kann ein Wagen 2 in einer weiteren Ausführung auch über eine eigene Energieversorgung in Form von Batterien, Akkumulatoren und/oder Solarzellen verfügen.

Auch ist ein mechanischer Antrieb, beispielsweise über Antriebssysteme, die mit der Führungsschiene 1 verbunden oder in diese integriert sind, z. B. antreibbare Räder oder Rollen sowie Kombinationen daraus möglich.

An der Zustellstation 6 sind zwei Säulen 25 (nur eine zu sehen) so angebracht, dass diese auf der, der Zustellstation 6 abgewandten, Seite der Führungsschiene 1 und auf jeder Seite der Zustellposition 4 aufragen.

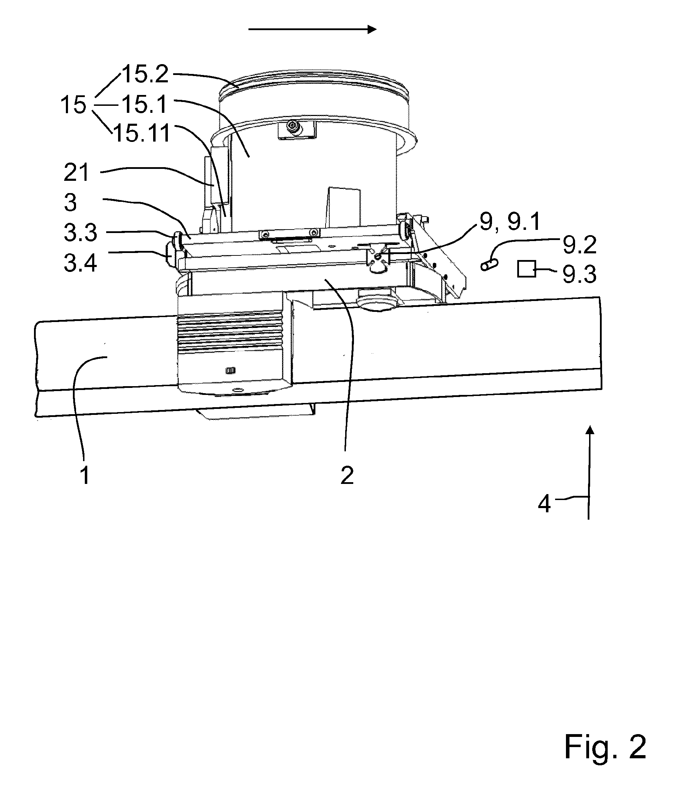

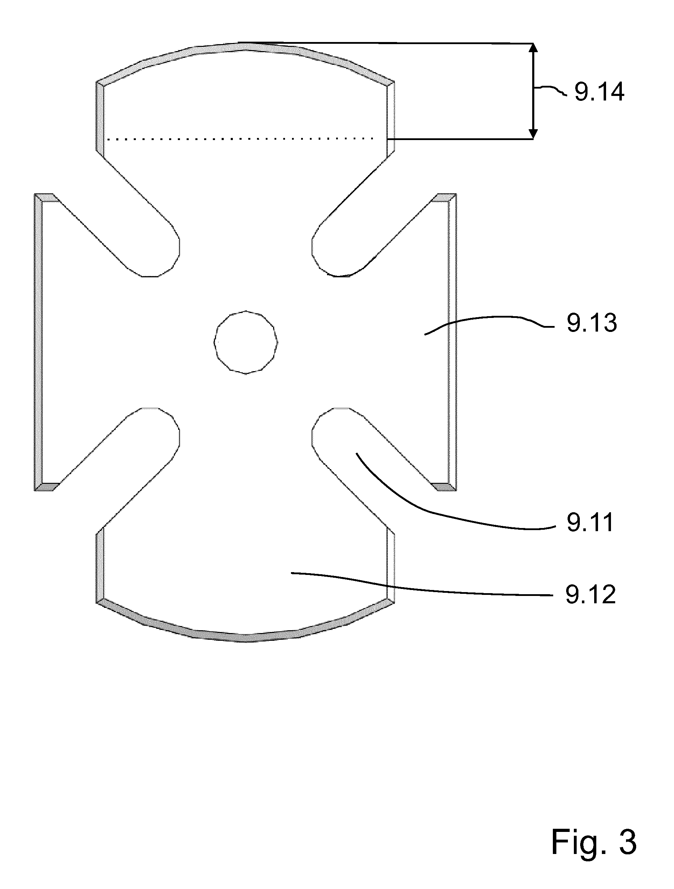

In Fig. 2 ist vereinfacht eine Verriegelung 9 gezeigt, mittels der der Zustelltisch 3 mit dem Wagen 2 verriegelbar ist. Die Verriegelung 9 ist durch ein an dem Wagen 2 drehbar befestigtes Malteserkreuz 9.1 sowie ein erstes Schaltelement 9.2 und ein zweites Schaltelement 9.3 zum Schalten des Malteserkreuzes 9.1 um jeweils eine Viertelumdrehung gebildet. Das Malteserkreuz 9.1 (der Übersichtlichkeit halber ebenfalls in Fig. 3 gezeigt) weist zwei sich gegenüberliegende lange Arme 9.12 und zwei sich gegenüberliegende kurze Arme 9.13 auf. Die Längendifferenz der kurzen und langen Arme 9.13, 9.12 ist als Überstand 9.14 (siehe Fig. 3) bezeichnet. Das Malteserkreuz 9.1 ist so an dem Wagen 2 angeordnet, dass es um seine Mittelachse (nicht gezeigt) drehbar ist und jeweils ein Überstand 9.14 einer der langen Arme 9.12 in einer senkrecht nach oben weisenden Stellung in eine Vertiefung (nur angedeutet) an der Unterseite des Zustelltisches 3 eingreift. Dadurch ist eine ungewollte Verschiebung des Zustelltisches 3 von dem Wagen 2 in zwei Richtungen quer zum Verlauf der Führungsschiene 1 verhindert. Eine Verschiebung in Richtung der Führungsschiene 1 ist durch seitlich über den Wagen 2 überkragende Ränder 3.4 des Zustelltisches 3 sowie durch eine Ausrichtung von an dem Zustelltisch 3 angebrachten Rädern als Fahrelemente 3.3 vermieden.

Neben der Führungsschiene 1 sind ein erstes Schaltelement 9.2 und ein zweites Schaltelement 9.3 vorhanden. Das erste Schaltelement 9.2 ist als ein Bolzen ausgebildet, der so dimensioniert und positioniert ist, dass er bei einer Vorbeifahrt des Wagens 2 immer in denjenigen Schlitz 9.11 eingreift, dessen Öffnung etwa in Richtung des ersten Schaltelements 9.2 weist. Die Richtung der dargestellten Vorbeifahrt ist durch einen Pfeil gezeigt.

Das zweite Schaltelement 9.3 ist als eine horizontal ausgerichtete Platte ausgebildet und so positioniert, dass lediglich die langen Arme 9.12 bei einer Vorbeifahrt des Wagens 2 gegen das zweite Schaltelement 9.3 stoßen können. Dies geschieht nur dann, wenn die langen Arme 9.12 vertikal ausgerichtet sind. Sind die kurzen Arme 9.13 vertikal ausgerichtet, sind diese berührungsfrei an dem zweiten Schaltelement 9.3 vorbeiführbar.

Die Fig. 2 zeigt einen Wagen 2 in Anfahrt auf eine Zustellposition 4. Das erste Schaltelement 9.2 ist in Fahrtrichtung des Wagens 2 vor der Zustellposition 4 angeordnet. Das zweite Schaltelement 9.3 ist nachfolgend so angeordnet, dass bei Erreichen der Zustellposition 4 durch den Wagen 2 ein durch das zweite Schaltelement 9.3 bewirktes Schalten des Malteserkreuzes 9.1 abgeschlossen ist.

Da der Wagen 2 aus zwei verschiedenen Richtungen zur Zustellposition 4 gelangen kann, sind beiderseits der Zustellposition 4 ein zweites Schaltelement 9.3 und anschließend ein erstes Schaltelement 9.2 angeordnet (nur auf einer Seite gezeigt). Die ersten und zweiten Schaltelemente 9.2, 9.3 sind jeweils an neben der Führungsschiene 1 angebrachten und mit der Zustellstation 6 verbundenen Säulen 25 (siehe Fig. 1) positioniert und gehalten.

Auf dem Zustelltisch 3 ist eine vertikale Führung 21 angeordnet, durch die ein auf dem Zustelltisch 3 platziertes Objekt 15 in einer vorbestimmten Orientierung gehalten ist. Das Objekt 15 ist ein Behälter 15.1 mit einem Steg 15.11, der in die Führung 21 eingreifend gestaltet ist. Ein auf dem Behälter 15.1 aufgesetzter Deckel 15.2 ist durch den Steg 15.11 nicht in seiner Orientierung festgelegt.

Liegt der Wagen 2 bei Erreichen des ersten Schaltelements 9.2 in einem verriegelten Zustand vor, wird das Malteserkreuz 9.1 durch Eingreifen des ersten Schaltelements 9.2 in den Schlitz 9.11 eine Viertelumdrehung geschaltet und einer der kurzen Arme 9.13 in eine vertikal nach oben gerichtete Stellung bewegt. Der Wagen 2 befindet sich nun im entriegelten Zustand. Bei Erreichen des zweiten Schaltelements 9.3 wird das Malteserkreuz 9.1 ohne Berührung an dem zweiten Schaltelement 9.3 vorbei geführt, so dass der entriegelte Zustand erhalten bleibt.

Weist dagegen der Wagen 2 bei Erreichen des ersten Schaltelements 9.2 einen entriegelten Zustand auf, wird durch Wirkung des ersten Schaltelements 9.2 ein verriegelter Zustand hergestellt. Dabei ragt einer der langen Arme 9.12 in die Vertiefung des Zustelltisches 3, während der gegenüberliegende lange Arm 9.12 senkrecht nach unten ragt. Bei Erreichen des zweiten Schaltelements 9.3 ist der nach unten ragende lange Arm 9.12 mit seinem Überstand 9.14 gegen das zweite Schaltelement 9.3 gefahren, wodurch bei Weiterfahrt des Wagens 2 eine weitere Viertelumdrehung des Malteserkreuzes 9.1 bewirkt wird und der entriegelte Zustand hergestellt ist.

Ist der Wagen 2 von der Zustellposition 4 weg gefahren, wird durch das zweite Schaltelement 9.3 und das erste Schaltelement 9.2 immer einer der langen Arme 9.12 vertikal orientiert.

Das Malteserkreuz 9.1 ist in Fig. 3 näher gezeigt. Es weist zwei sich gegenüberliegende lange Arme 9.12 und zwei sich gegenüberliegende kurze Arme 9.13 auf. Die Längendifferenz der kurzen und langen Arme 9.13, 9.12 ist als Überstand 9.14 an einem der vertikal gerichteten langen Arme 9.12 verdeutlicht, wobei hilfsweise die Länge eines kurzen Armes 9.13 auf dem langen Arm 9.12 markiert ist. Zwischen den Armen 9.12, 9.13 ist jeweils ein Schlitz 9.11 vorhanden.

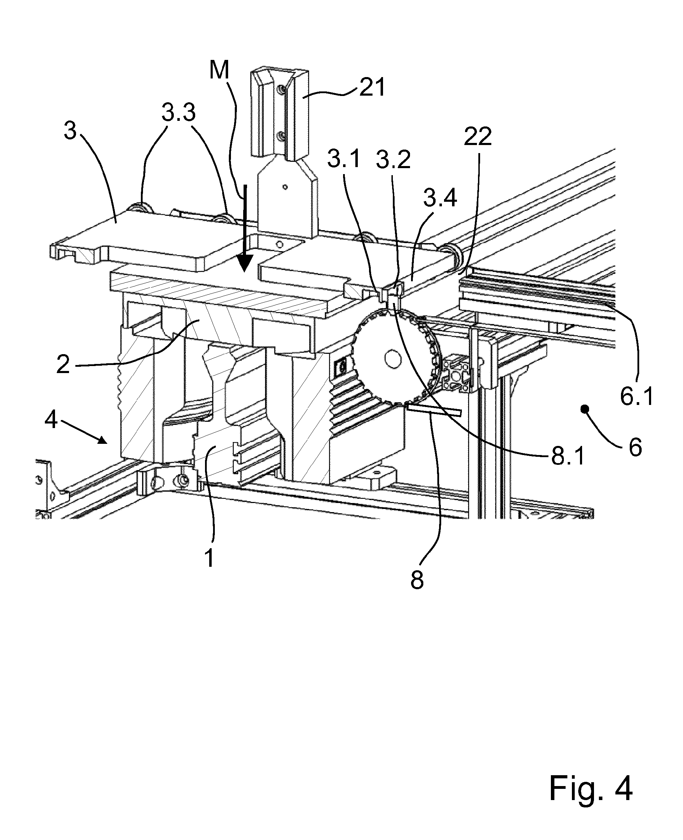

Eine Zustellbahn 6.1 der Zustellstation 6 ist in Fig. 4 gezeigt. Die Zustellbahn 6.1 besteht aus zwei parallel geführten Schienen, zwischen denen das Transportband 8 angeordnet ist. Die Fig. 4 ist eine teilweise Schnittdarstellung mittig durch den Wagen 2, den Zustelltisch 3 und die Führungsschiene 1, in der nur eine Schiene der Zustellbahn 6.1 zu sehen ist. Zwischen der Zustellbahn 6.1 und dem in der Zustellposition 4 befindlichen Wagen 2 ist ein funktionsbedingter Spalt 22 vorhanden. An dem Zustelltisch 3 sind zweimal vier Räder als Fahrelemente 3.3 so angeordnet, dass jeder Achsabstand jedes der Fahrelemente 3.3 größer als der Spalt 22 ist. Eine Wirkung eines Masseschwerpunkts M (durch einen Pfeil angedeutet) des Zustelltisches 3 mit oder ohne Objekt 15 (nicht gezeigt) ist zwischen die Achsen der jeweils mittleren Fahrelemente 3.3 gerichtet. Die Zustellbahn 6.1 ist zumindest an ihrem dem Spalt 22 zugewandten Ende auf gleicher horizontaler Höhe wie eine Oberfläche des Wagens 2, so dass der Zustelltisch 3 horizontal zwischen Zustellbahn 6.1 und Wagen 2 verfahrbar ist.

An dem Transportband 8 (angedeutet) sind von dem Transportband 8 nach außen abstehende Mitnehmer 8.1 in Form von Blöcken vorhanden, die an dem Transportband 8 befestigt sind. Zur Bewirkung einer Bewegung des Zustelltisches 3 auf die Endposition 5 (siehe Fig. 1) zu, ist das Transportband 8 angetrieben und einer der Mitnehmer 8.1 ist gegen einen ersten Anschlag 3.1 des Zustelltisches 3 gefahren. Der erste Anschlag 3.1 ist durch eine Innenseite des Rands 3.4 an der Seite des Zustelltisches 3 gebildet, die der Endposition 5 zugewandt ist. Bei einer weiteren Bewegung des Transportbands 8 ist der Zustelltisch 3 von dem Wagen 2 auf die Zustellbahn 6.1 gezogen. Ist der Zustelltisch 3 vollständig auf die Zustellbahn 6.1 gezogen, ist der Wagen 2 aus der Zustellposition 4 verfahrbar. Der Zustelltisch 3 ist durch das sich bewegende Transportband 8 so lange verschoben, bis das Transportband 8 gestoppt wird oder der Mitnehmer 8.1 von dem ersten Anschlag 3.1 weggeschwenkt ist. Dies geschieht, wenn das Transportband 8 einen Umlenkpunkt erreicht und der im Eingriff befindliche Mitnehmer 8.1 zwischen die Schienen der Zustellbahn 6.1 nach unten weggeführt ist. Ein weiterer Mitnehmer 8.1 ist nun gegen einen zweiten Anschlag 3.2 auf der der Endposition 5 abgewandten Seite des Zustelltisches 3 gefahren, wodurch der Zustelltisch 3 bei weiterer Bewegung des Transportbands 8 in die Endposition 5 geschoben ist (Push-Pull-Prinzip).

Sinngemäß erfolgt eine Zustellung des Zustelltisches 3 zu einem in der Zustellposition 4 befindlichen Wagen 2, indem das Transportband 8 in umgekehrter Richtung angetrieben ist. Der Zustelltisch 3 weist jeweils einen ersten Anschlag 3.1 und einen zweiten Anschlag 3.2 an jedem seiner, in Zustellrichtung 7 (siehe Fig. 1) gerichteter Ränder 3.4 auf.

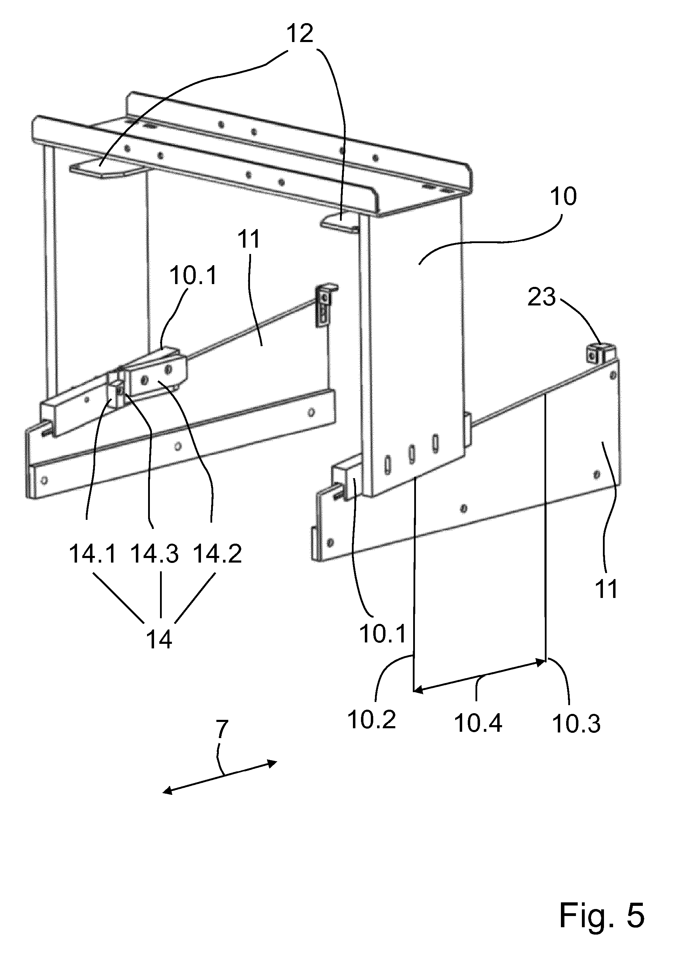

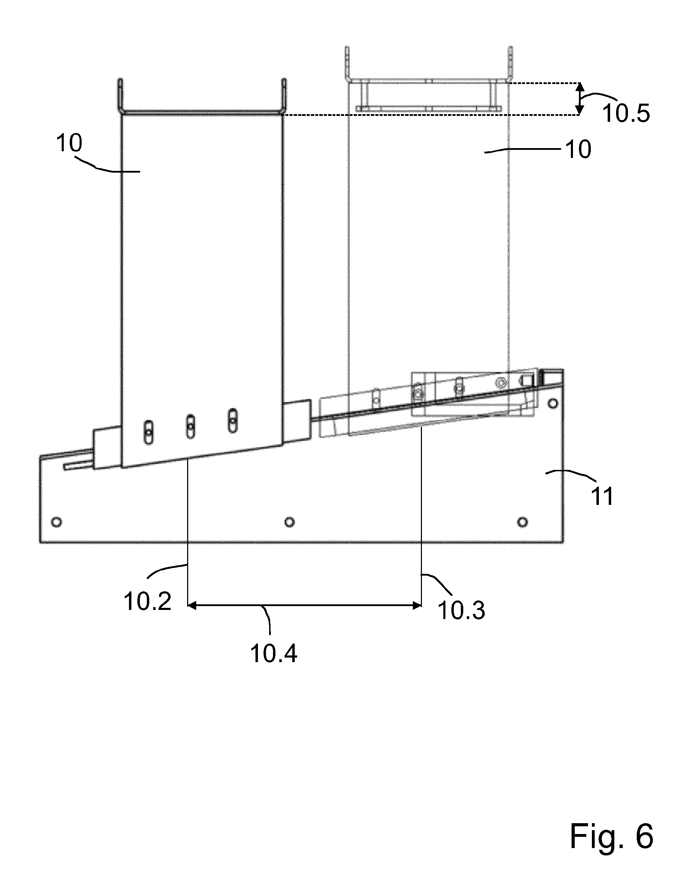

In einer zweiten Ausführung des erfindungsgemäßen modularen Zustellsystems gemäß Fig. 5 ist ein, die Zustellbahn 6.1 überspannendes, Portal 10 vorhanden. Zur Vereinfachung wurde auf die Darstellung der Zustellbahn 6.1 verzichtet (siehe z. B. Fig. 1 und 4). Beiderseits ist an der Zustellbahn 6.1 je eine schiefe Ebene 11 angeordnet, die in Richtung der Endposition 5 (siehe Fig. 1) ansteigt. Das Portal 10 ist als U-förmiger Rahmen gestaltet, dessen vertikal gerichtete Seitenwände mit je einem Gleitschuh 10.1 verbunden sind. Jeder Gleitschuh 10.1 sitzt auf je einer schiefen Ebene 11 auf. Das Portal 10 ist zwischen einer ersten Position 10.2 am niedrigeren Ende der schiefen Ebene 11 und einer zweiten Position 10.3 an einem höheren Ende der schiefen Ebene 11 entlang einer Strecke 10.4 zwischen der ersten und der zweiten Position 10.2, 10.3 verschiebbar. Während einer Verschiebung des Portals 10 gleiten die Gleitschuhe 10.1 die schiefe Ebene 11 entlang, wodurch das Portal 10, je nach verfolgter Zustellrichtung 7, um einen Höhenbereich 10.5 (siehe Fig. 6) gehoben oder gesenkt ist.

An jedem Gleitschuh 10.1 ist an der Innenseite des Portals 10 eine Kulisse 14 angeordnet. Die Kulisse 14 weist einen ersten Steg 14.1 und einen zweiten Steg 14.2 auf, die von einer vertikal verlaufenden und auf der vom Portal 10 abgewandten Seite offenen Nut 14.3 getrennt sind.

An den inneren Wänden des Portals 10 ist jeweils ein Hebeelement 12 in Form je eines horizontal ausgerichteten und senkrecht von der inneren Wand abstehenden Blechs vorhanden. Die Hebeelemente 12 sind in gleicher Höhe und parallel zueinander ausgerichtet. An der schiefen Ebene 11 sind Sperren 23 vorhanden, die eine Bewegung des Portals 10 entlang der schiefen Ebene begrenzen und ein Überfahren der zweiten Position 10.3 verhindern.

In weiteren Ausführungen des Zustellsystems können auch an der ersten Position 10.2 Sperren 23 vorhanden sein. Die Sperren 23 können außerdem mit Magneten versehen sein, durch welche das Portal 10 an der zweiten Position 10.3 gehalten ist, um ein Abgleiten des Portals 10 zu vermeiden.

Die zweite Ausführung des erfindungsgemäßen modularen Zustellsystems aus Fig. 5 ist in Fig. 6 unter einer seitlichen Perspektive gezeigt. Durch eine Verschiebung des Portals 10 um die Strecke 10.4 aus der ersten Position 10.2 in die zweite Position 10.3 ist das Portal 10 um den Betrag des Höhenbereichs 10.5 angehoben. Der Höhenbereich 10.5 entspricht der Erhöhung der schiefen Ebene 11 zwischen erster und zweiter Position 10.2, 10.3.

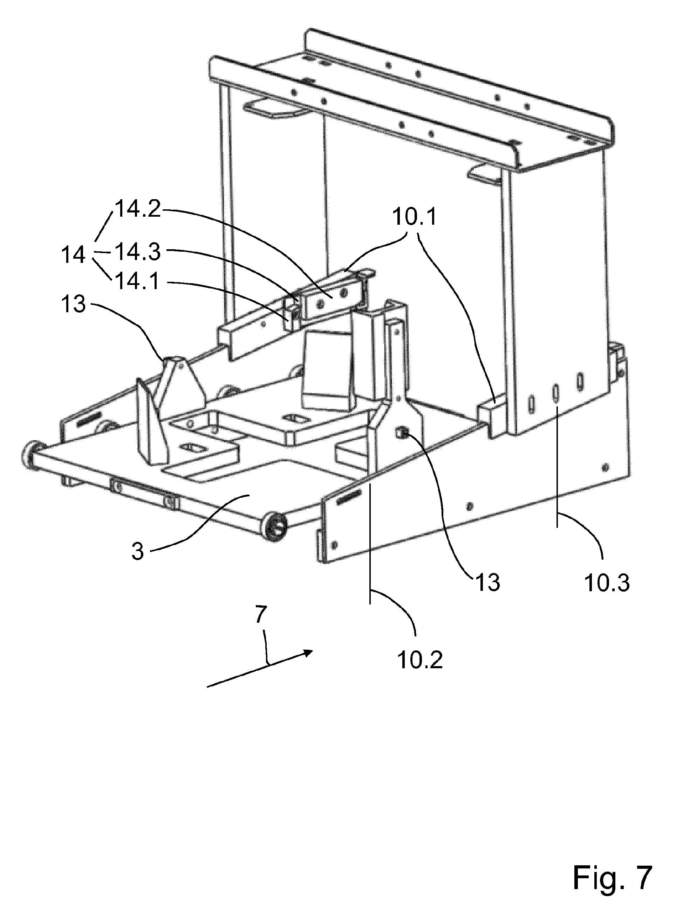

Das Portal 10 ist durch den bewegten Zustelltisch 3 zwangsgesteuert gehoben oder gesenkt. Wie in Fig. 7 zu sehen, sind an dem Zustelltisch 3 beiderseits Nocken 13 angeordnet, die so dimensioniert und positioniert sind, dass diese mit je einer Kulisse 14 an jedem der Gleitschuhe 10.1 bei einer Verschiebung des Zustelltisches 3 in Zustellrichtung 7 in Kontakt treten.

Zur Verdeutlichung des Vorgangs ist eine künstliche Situation gewählt, in welcher der Zustelltisch 3 etwa auf Höhe der ersten Position 10.2 und das Portal 10 in der zweiten Position 10.3 gezeigt ist.

Bei einer Verschiebung des Zustelltisches 3 in der gezeigten Zustellrichtung 7 tritt jeder Nocken 13 bei Erreichen der ersten Position 10.2 mit der Kulisse 14 in Kontakt. Dabei ist der Nocken 13 über den ersten Steg 14.1, der in vertikaler Richtung oben kürzer als der zweite Steg 14.2 ist, gefahren. Der zweite Steg 14.2 ist hingegen in vertikaler Richtung unten kürzer als der erste Steg 14.1. Durch den Nocken 13 ist eine Kraft, die aus der Bewegung des Zustelltisches 3 resultiert, auf den zweiten Steg 14.2 und damit auf das Portal 10 geleitet. Das Portal 10 ist durch die Kraft in Zustellrichtung 7 geschoben. Durch die Wirkung der die schiefe Ebene 11 hinaufgleitenden Gleitschuhe 10.1 ist das Portal 10 stetig angehoben. Da sich die vertikale Positionierung der Nocken 13 währenddessen nicht verändert, sind diese während der Hebung des Portals 10 von oben nach unten durch die Nut 14.3 geführt. Bei Erreichen der zweiten Position 10.3 erreichen die Nocken 13 auch das vertikal nach unten weisende Ende des zweiten Stegs 14.2 und treten aus der Nut 14.3 aus. Der Zustelltisch 3 - und mit ihm die Nocken 13 - ist weiter in Zustellrichtung 7 bewegt. Da die Nocken 13 keine Kraft mehr auf das Portal 10 leiten, wird dieses nicht weiter verschoben und verbleibt an der zweiten Position 10.3.

Bei einer Bewegung des Zustelltisches 3 von der Endposition 5 hin zur Zustellposition 4 (beide nicht gezeigt) passiert jeder der Nocken 13 den zweiten Steg 14.2 und trifft auf eine der Nut 14.3 zugewandten Seitenfläche des ersten Stegs 14.1. Es wird eine Kraft in den ersten Steg 14.1 und infolgedessen in das Portal 10 geleitet und das Portal 10 entgegen der gezeigten Zustellrichtung 7 verschoben. Die Nocken 13 treten in die jeweiligen Nuten 14.3 ein und werden infolge des Absenkens des Portals 10 von unten nach oben durch die Nut 14.3 geführt, bis die Nocken 13 an der ersten Position 10.2 aus der Nut 14.3 austreten und ohne Kontakt zur Kulisse 14 weiter verschoben werden. Das Portal 10 verbleibt daher an der ersten Position 10.2.

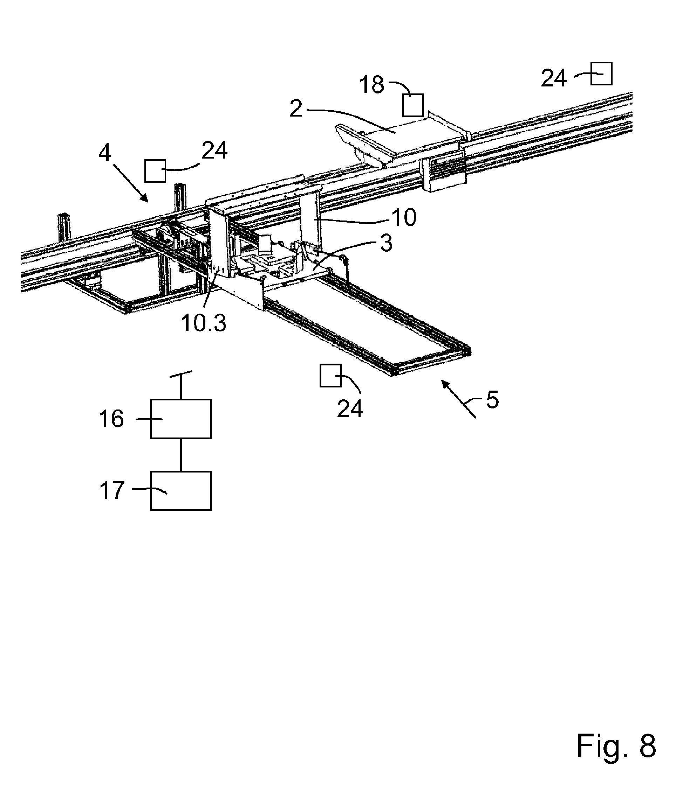

Eine zweite Ausführung des erfindungsgemäßen modularen Zustellsystems mit Portal 10 ist in Fig. 8 gezeigt. Der Zustelltisch 3 befindet sich unter dem Portal 10 und das Portal 10 ist an der ersten Position 10.2. Der Wagen 2 ist ohne Zustelltisch 3 aus der Zustellposition 4 heraus verfahren. Durch die Wirkung der ersten und zweiten Schaltelemente 9.2, 9.3 sind die langen Arme 9.12 des Malteserkreuzes 9.1 vertikal ausgerichtet (alle nicht dargestellt). Der Wagen 2 trägt einen induktiv anregbaren Passivsender als Ortungselement 18 mit einer einzigartigen Kodierung zur individuellen Kennzeichnung des Wagens 2. Durch Lesevorrichtungen 24 (nur sehr schematisch und beispielhaft dargestellt), die dem modularen Zustellsystem zugeordnet sind, ist, abhängig von der gewählten Betriebsweise und Ausführung der Lesevorrichtungen 24, eine permanente oder punktuelle Lokalisierung der Ortungselemente 18 möglich.

Dem modularen Zustellsystem zugeordnet ist eine Steuerung 16 zur Ansteuerung aller vorhandenen Antriebe, für deren Geschwindigkeitskontrolle und -beeinflussung sowie zur Erfassung der Daten der Lokalisierungen der Ortungselemente 18. Die Steuerung 16 steht signaltechnisch mit einer Datenbank 17 in Verbindung, in welcher ständig aktualisierbar Informationen über die Proben, die aktuellen Lokalisierungen der Ortungselemente 18, die erfolgten Manipulationen der Proben (z. B. Entnahme, Behandlung, Einlegen, Platzwechsel usw.) und über die aktuell und perspektivisch erwünschten Verfügbarkeiten der Proben speicher- und abrufbar sind.

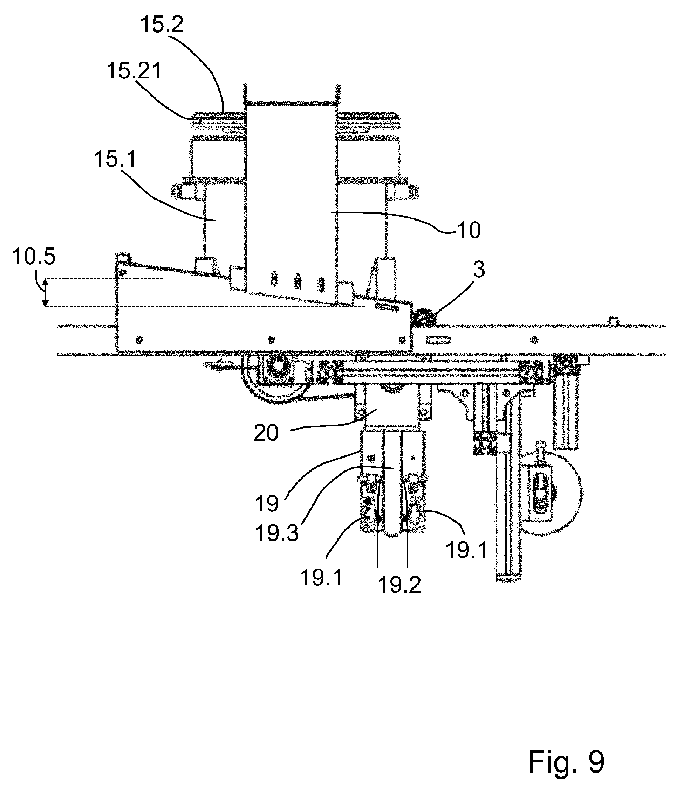

Eine Ausführung eines Drehmomentsensors 19 kann als drehbar gelagertes Element gestaltet sein, wie dies in Fig. 9 gezeigt ist. Ein Elektromotor als Antrieb 20 des Transportbands 8 (nicht gezeigt) ist so gelagert, dass er bei Überschreiten eines bestimmten Schwellwertes des auf die Lagerung des Antriebs 20 einwirkenden Drehmoments gegenläufig verdreht ist. Eine solche Überschreitung kann durch einen betriebsmäßig beabsichtigten Zustand, wie beispielsweise Pressen des Zustelltisches 3 gegen einen festen Anschlag oder bei einem technischen Defekt, wie beispielsweise bei einem Versuch, einen nicht entriegelten Zustelltisch 3 auf die Zustellbahn 6.1 zu verschieben oder bei einem Verkanten eines Nockens 13 in der Kulisse 14, auftreten. Durch eine Verdrehung des Antriebs 20 ist ein Schalter 19.1 des Drehmomentsensors 19 betätigt, wodurch die Energiezufuhr zu dem Antrieb 20 unterbrochen wird und eine Fehlermeldung an die Steuerung 16 ergeht. Eine Schaltzunge 19.3 ist durch vorgespannte Federn 19.2 in einer Ausgangslage (gezeigt) gehalten. Bei Überwindung einer durch die Federn 19.2 bewirkten Kraft auf die Schaltzunge 19.3 wird diese aus der Ausgangslage ausgelenkt und einer der Schalter 19.1 betätigt. In weiteren Ausführungen des Drehmomentsensors 19 können auch andere Anzahlen von Schaltern 19.1, Federn 19.2 und Schaltzungen 19.3 vorhanden sowie andere Schaltprinzipien verwirklicht sein.

Fig. 9 illustriert zudem ein Abheben eines Deckels 15.2 von einem Behälter 15.1. Das Portal 10 befindet sich auf der Hälfte der Strecke 10.4 (siehe z. B. Fig. 6). Die Hebeelemente 12 traten an der ersten Position 10.2 in eine horizontal umlaufende Rille 15.21 des Deckels 15.2 ein. Während der Verschiebung des Zustelltisches 3 mit dem Behälter 15.2 ist das Portal 10 um die Hälfte des Höhenbereichs 10.5 angehoben worden und mit ihr auch der Deckel 15.2. Bei Erreichen der zweiten Position 10.3 (siehe z. B. Fig. 6) wird der Deckel 15.2 nicht nur vollständig ab-, sondern um einen definierten Abstand über den Behälter 15.1 hinausgehoben worden sein.

### Bezugszeichenliste

- 1: Führungsschiene
- 2: Wagen
- 3: Zustelltisch
- 3.1: erster Anschlag
- 3.2: zweiter Anschlag
- 3.3: Fahrelement
- 3.4: Rand
- 4: Zustellposition
- 5: Endposition
- 6: Zustellstation
- 6.1: Zustellbahn
- 7: Zustellrichtung
- 8: Transportband
- 8.1: Mitnehmer
- 9: Verriegelungselement
- 9.1: Malteserkreuz
- 9.11: Schlitz
- 9.12: langer Arm
- 9.13: kurzer Arm
- 9.14: Überstand
- 9.2: erstes Schaltelement
- 9.3: zweites Schaltelement
- 10: Portal
- 10.1: Gleitschuh
- 10.2: erste Position
- 10.3: zweite Position
- 10.4: Strecke
- 10.5: Höhenbereich
- 11: schiefe Ebene
- 12: Hebeelemente
- 13: Nocken
- 14: Kulisse
- 14.1: erster Steg
- 14.2: zweiter Steg
- 14.3: Nut
- 15: Objekt
- 15.1: Behälter
- 15.11: Steg
- 15.2: Deckel
- 15.21: umlaufende Rille
- 16: Steuerung
- 17: Datenbank
- 18: Ortungselement
- 19: Drehmomentsensor
- 19.1: Schalter (des Drehmomentsensors)
- 19.2: Feder
- 19.3: Schaltzunge
- 20: Antrieb (des Transportbandes)
- 21: Führung
- 22: Spalt
- 23: Sperre
- 24: Lesevorrichtung
- 25: Säule
- M: Masseschwerpunkt

## Patentansprüche

1. Modulares Zustellsystem beinhaltend eine Führungsschiene (1), der mindestens eine Zustellstation (6) zur Zustellung eines Objektes an eine Endposition (5) zugeordnet ist, sowie einen entlang der Führungsschiene (1) verfahrbaren Wagen (2) zum Transport eines Objektes, wobei durch jede zugeordnete Zustellstation (6) eine Zustellposition (4) des Wagens (2) bestimmt ist und der Wagen (2) wiederholt mindestens einer der Zustellpositionen (4) zustellbar ist,
wobei der Wagen (2) einen horizontal auf- und abnehmbaren Zustelltisch (3) aufweist, und wobei der Zustelltisch (3) von jeder Zustellposition (4) an die zugeordnete Endposition (5) und von jeder Endposition (5) an die zugeordnete Zustellposition (4) übertragbar ist, **dadurch gekennzeichnet, dass**
- der Wagen (2) ein Verriegelungselement (9) zur Verriegelung des Zustelltisches (3) an dem Wagen (2) aufweist, wobei das Verriegelungselement (9) ein um seine Mittelachse drehbares Malteserkreuz (9.1) mit vier sich gegenüberliegenden Armen (9.12, 9.13) und vier sich gegenüberliegenden Schlitzen (9.11) ist, wobei zwei sich gegenüberliegende Arme (9.12) in radialer Richtung mit einem Überstand (9.14) über die anderen Arme (9.13) ragend ausgebildet sind und
- die Zustellstation (6) mindestens zwei Schaltelemente (9.2, 9.3) zum Schalten des Malteserkreuzes (9.1) aufweist, wobei ein erstes Schaltelement (9.2) als ein in jeweils einen der Schlitze (9.11) des Malteserkreuzes (9.1) eingreifbar angeordneter Bolzen und ein zweites Schaltelement (9.3) als ein Element ausgebildet ist, gegen das einer der Überstände (9.14) während einer Verfahrbewegung des Wagens (2) so anfahrbar ist, dass eine Drehung des Malteserkreuzes (9.1) um eine Viertelumdrehung bewirkt ist.

2. Modulares Zustellsystem nach Anspruch 1, **dadurch gekennzeichnet, dass** die Zustellstation (6) mindestens eine Zustellbahn (6.1) zur Führung des Zustelltisches (3), ein gesteuert antreibbares Transportband (8) aufweisend mindestens einen Mitnehmer (8.1) zur Verschiebung des Zustelltisches (3) entlang der Zustellbahn (6.1), wobei mindestens einer der Mitnehmer (8.1) gegen einen ersten Anschlag (3.1) des Zustelltisches (3) bewegbar ist und mindestens ein Mitnehmer (8.1) gegen einen zweiten Anschlag (3.2) des Zustelltisches (3) bewegbar ist, sowie einen die Endposition (5) bildenden Bereich aufweist.

3. Modulares Zustellsystem nach Anspruch 1 oder 2, **dadurch gekennzeichnet, dass** auf eine Anordnung eines ersten Schaltelements (9.2) und eines zweiten Schaltelements (9.3) ein weiteres zweites Schaltelement (9.3) und ein weiteres erstes Schaltelement (9.2) folgt, so dass ein auf dem Wagen (2) befindlicher Zustelltisch (3), bei Erreichen der Zustellposition (4) im entriegelten Zustand und nach dem Verlassen der Zustellposition (4) und nach Passieren der Anordnung der Schaltelemente (9.2, 9.3) im verriegelten Zustand vorliegt.

4. Modulares Zustellsystem nach einem der vorhergehenden Ansprüche, **dadurch gekennzeichnet, dass** der Zustelltisch (3) Fahrelemente (3.3) aufweist, die so angeordnet sind, dass bei der Zustellung des Zustelltisches (3) von einem an der Zustellposition (4) befindlichen Wagen (2) zur Endposition (5) ein zwischen dem Wagen (2) und der Zustellbahn (6.1) vorhandener Spalt (22) mindestens von einem der Fahrelemente (3.3) bereits überwunden ist, bevor der Masseschwerpunkt (M) des Zustelltisches (3) über den Spalt (22) gelangt.

5. Modulares Zustellsystem nach einem der vorhergehenden Ansprüche, **dadurch gekennzeichnet, dass** die Zustellbahn (6.1) von einem Portal (10) überspannt ist, unter welcher der Zustelltisch (3) durchführbar ist und das Portal (10) entlang einer Strecke (10.4) in Zustellrichtung (7) verschiebbar und gleichzeitig höhenverstellbar ist.

6. Modulares Zustellsystem nach Anspruch 5, **dadurch gekennzeichnet, dass** das Portal (10) durch den Zustelltisch (3) entlang der Strecke (10.4) zwangsgeführt ist.

7. Modulares Zustellsystem nach Anspruch 6, **dadurch gekennzeichnet, dass** der Zustelltisch (3) mindestens einen Nocken (13) und das Portal (10) mindestens eine Kulisse (14) aufweist, wobei Nocken (13) und Kulisse (14) so gestaltet und angeordnet sind, dass der Nocken (13) zu Beginn der Strecke (10.4) in die Kulisse (14) eingreift und am Ende der Strecke (10.4) aus der Kulisse (14) austritt.

8. Modulares Zustellsystem nach einem der Ansprüche 5 bis 7, **dadurch gekennzeichnet, dass** an dem Portal (10) mindestens ein Hebeelement (12) zur Entdeckelung eines auf dem Zustelltisch (3) transportierten und mit einem Deckel (15.2) versehenen Behälters (15.1) vorhanden ist.

9. Modulares Zustellsystem nach einem der vorhergehenden Ansprüche, **dadurch gekennzeichnet, dass** der Antrieb (20) einen Drehmomentsensor (19) aufweist, der durch ein bei Überschreitung eines Drehmomentschwellwerts verdrehbar gelagertes Element gebildet ist.

10. Modulares Zustellsystem nach einem der vorhergehenden Ansprüche, **dadurch gekennzeichnet, dass** eine Steuerung (16) vorhanden ist, durch die der Wagen (2) und die Zustellstation (6) ansteuerbar sind.

11. Modulares Zustellsystem nach Anspruch 10, **dadurch gekennzeichnet, dass** jeder Wagen (2) und/oder jeder Zustelltisch (3) je ein Ortungselement (18) aufweist, durch das eine Lokalisierung des Wagens (2) und/oder des Zustelltisches (3) ermöglicht ist.

12. Modulares Zustellsystem nach Anspruch 10 oder 11, **dadurch gekennzeichnet, dass** die Steuerung (16) mit einer Datenbank (17) signaltechnisch in Verbindung steht.

13. Verwendung des modularen Zustellsystems nach einem der vorhergehenden Ansprüche zur Zustellung von gekühlten Proben zu einer Anzahl von Endpositionen (5).

## Claims

1. Modular delivery system including a guide rail (1) with which is associated at least one delivery station (6) for delivering an object to an end position (5), and a trolley (2) which is movable along the guide rail (1) for transporting an object, a delivery position (4) of the trolley (2) being determined by each associated delivery station (6), and the trolley (2) being repeatedly deliverable to at least one of the delivery positions (4), wherein the trolley (2) has a delivery table (3) which can be placed on and removed from the trolley (2) horizontally, and wherein the delivery table (3) is transferable from each delivery position (4) to the associated end position (5) and from each end position (5) to the associated delivery position (4), **characterized in that**
- the trolley (2) has a locking element (9) for locking the delivery table (3) to the trolley (2), the locking element (9) being a Maltese cross (9.1) which is rotatable around its center axis and having four opposed arms (9.12, 9.13) and four opposed slots (9.11), two opposed arms (9.12) being formed so as to extend beyond the other arms (9.13) by a projecting length (9.14) in radial direction and
- the delivery station (6) has at least two switching elements (9.2, 9.3) for switching the Maltese cross (9.1), a first switching element (9.2) being formed as a pin which is arranged so as to engage in one of the slots (9.11) of the Maltese cross (9.1) in each instance, and a second switching element (9.3) being formed as an element against which one of the projecting lengths (9.14) can move during a traveling movement of the trolley (2) so as to cause a rotation of the Maltese cross (9.1) by one quarter of a revolution.

2. Modular delivery system according to claim 1, **characterized in that** the delivery station (6) has at least one delivery path (6.1) for guiding the delivery table (3), a transporting belt (8) which can be driven in a controlled manner and which has at least one driver (8.1) for displacing the delivery table (3) along the delivery path (6.1), wherein at least one of the drivers (8.1) is movable against a first stop (3.1) of the delivery table (3) and at least one driver (8.1) is movable against a second stop (3.2) of the delivery table (3), and the delivery station (6) has a region forming the end position (5).

3. Modular delivery system according to claim 1 or 2, **characterized in that** an arrangement of a first switching element (9.2) and a second switching element (9.3) is followed by a further second switching element (9.3) and a further first switching element (9.2) so that a delivery table (3) located on the trolley (2) is in unlocked condition when reaching the delivery position (4) and is in locked condition after exiting the delivery position (4) and after passing the arrangement of switching elements (9.2, 9.3).

4. Modular delivery system according to one of the preceding claims, **characterized in that** the delivery table (3) has movement elements (3.3) which are arranged in such a way that during delivery of the delivery table (3) from a trolley (2) located at the delivery position (4) to the end position (5) a gap (22) present between the trolley (2) and the delivery path (6.1) has already been crossed by at least one of the movement elements (3.3), before the center of mass (M) of the delivery table (3) arrives over the gap (22).

5. Modular delivery system according to one of the preceding claims, **characterized in that** the delivery path (6.1) is spanned by a portal (10) beneath which the delivery table (3) can be guided through, and the portal (10) is displaceable along an expanse (10.4) in delivery direction (7) and is simultaneously vertically adjustable.

6. Modular delivery system according to claim 5, **characterized in that** the portal (10) is positively guided along the expanse (10.4) by the delivery table (3).

7. Modular delivery system according to claim 6, **characterized in that** the delivery table (3) has at least one cam (13), and the portal (10) has at least one slotted link (14), wherein the cam (13) and slotted link (14) are configured and arranged in such a way that the cam (13) engages in the slotted link (14) at the start of the expanse (10.4) and exits the slotted link (14) at the end of the expanse (10.4).

8. Modular delivery system according to one of claims 5 to 7, **characterized in that** at least one lifting element (12) is provided at the portal (10) for uncovering a receptacle (15.1) which is transported on the delivery table (3) and which is provided with a lid (15.2).

9. Modular delivery system according to one of the preceding claims, **characterized in that** the drive (20) has a torque sensor (19) which is formed by an element which is mounted so as to be rotatable when a torque threshold is exceeded.

10. Modular delivery system according to one of the preceding claims, **characterized in that** a control (16) is provided, by which the trolley (2) and the delivery station (6) are controlled.

11. Modular delivery system according to claim 10, **characterized in that** each trolley (2) and/or each delivery table (3) has a locator element (18) allowing a location of the trolley (2) and/or delivery table (3) to be determined.

12. Modular delivery system according to claim 10 or 11, **characterized in that** the control (16) is signal-connected to a database (17).

13. Use of the modular delivery system according to one of the preceding claims for delivering cooled samples to a plurality of end positions (5).

## Revendications

1. Système de livraison modulaire contenant un rail de guidage (1) auquel est associé au moins un poste de livraison (6) pour délivrer un objet à une position finale (5), et un chariot (2) qui peut être déplacé le long du rail de guidage (1) pour transporter un objet, une position de livraison (4) du chariot (2) étant déterminée par chaque poste de livraison associé (6), et le chariot (2) pouvant être délivré à plusieurs reprises à au moins une des positions de livraison (4), le chariot (2) ayant une table de livraison (3) qui peut être placée sur et retirée du chariot (2) horizontalement, et la table de livraison (3) étant transférable de chaque position de livraison (4) à la position finale associée (5) et de chaque position finale (5) à la position de livraison associée (4), **caractérisé en ce que**
- le chariot (2) a un élément de verrouillage (9) pour verrouiller la table de livraison (3) au chariot (2), l'élément de verrouillage (9) étant une croix de Malte (9.1) qui peut être tournée autour de son axe central et ayant quatre bras opposés (9.12, 9.13) et quatre fentes opposées (9.11), deux bras opposés (9.12) étant formés de sorte qu'ils s'étendent au-dessus des autres bras (9.13) par une saillie (9.14) en direction radiale, et
- le poste de livraison (6) a au moins deux éléments de commutation (9.2, 9.3) pour la commutation de la croix de Malte (9.1), un premier élément de commutation (9.2) étant formé en tant qu'un boulon qui est disposé de manière à s'engrener dans une des fentes (9.11) de la croix de Malte (9.1) dans chaque cas, et un deuxième élément de commutation (9.3) étant formé en tant qu'un élément contre lequel une des saillies (9.14) peut se déplacer pendant un mouvement de déplacement du chariot (2) de façon qu'une rotation de la croix de Malte (9.1) d'un quart de tour est provoquée

2. Système de livraison modulaire selon la revendication 1, **caractérisé en ce que** le poste de livraison (6) a au moins un trajet de livraison (6.1) pour guider la table de livraison (3), une bande de transport (8) qui peut être entraînée d'une manière contrôlée et qui a au moins un entraîneur (8.1) pour déplacer la table de livraison (3) au long du trajet de livraison (6.1), dans lequel au moins un des entraîneurs (8.1) peut être déplacé contre une première butée (3.1) de la table de livraison (3) et au moins un entraîneur (8.1) peut être déplacé contre une deuxième butée (3.2) de la table de livraison (3), et le poste de livraison (6) a une zone, qui forme la position finale (5).

3. Système de livraison modulaire selon la revendication 1 ou 2, **caractérisé en ce qu'**un arrangement d'un premier élément de commutation (9.2) et d'un deuxième élément de commutation (9.3) est suit par un autre deuxième élément de commutation (9.3) et un autre premier élément de commutation (9.2) de façon qu'une table de livraison (3) se trouvant sur le chariot (2) est à un état déverrouillé quand elle parvient à la position de livraison (4) et à un état verrouillé après avoir quitté la position de livraison (4) et après avoir passé l'arrangement des éléments de commutation (9.2, 9.3).

4. Système de livraison modulaire selon une des revendications précédentes, **caractérisé en ce que** la table de livraison (3) a des éléments de mouvement (3.3) qui sont disposés de telle manière que pendant la livraison de la table de livraison (3) d'un chariot (2) qui se trouve dans la position de livraison (4) à la position finale (5) un trou (22) présent entre le chariot (2) et le trajet de livraison (6.1) a déjà été traversé par au moins un des éléments de mouvement (3.3) avant que le centre de gravité (M) de la table de livraison (3) arrive sur le trou (22).

5. Système de livraison modulaire selon une des revendications précédentes, **caractérisé en ce que** le trajet de livraison (6.1) est enjambé par un portail (10) sous lequel la table de livraison (3) peut être guidée, et le portail (10) peut être déplacé au long d'une étendue (10.4) en direction de livraison (7) et en même temps il est ajustable verticalement.

6. Système de livraison modulaire selon la revendication 5, **caractérisé en ce que** le portail (10) est guidé de force au long de l'étendue (10.4) par la table de livraison (3).

7. Système de livraison modulaire selon la revendication 6, **caractérisé en ce que** la table de livraison (3) a au moins une came (13), et le portail (10) a au moins une coulisse (14), la came (13) et la coulisse (14) étant configurées et disposées de telle manière que la came (13) s'engrène dans la coulisse (14) au début de l'étendue (10.4) et quitte la coulisse (14) à la fin de l'étendue (10.4).

8. Système de livraison modulaire selon une des revendications 5 à 7, **caractérisé en ce que** au moins un élément de levage (12) est fourni au portail (10) pour découvrir un récipient (15.1) qui est transporté sur la table de livraison (3) et qui est pourvu d'un couvercle (15.2).

9. Système de livraison modulaire selon une des revendications précédentes, **caractérisé en ce que** l'entraînement (20) a un capteur de couple (19) qui est formé par un élément qui est monté de façon à pouvoir tourner quand un seuil du couple est dépassé.

10. Système de livraison modulaire selon une des revendications précédentes, **caractérisé en ce qu'**un contrôle (16) est fourni, par lequel le chariot (2) et le poste de livraison (6) sont contrôlés.

11. Système de livraison modulaire selon la revendication 10, **caractérisé en ce que** chaque chariot (2) et/ou chaque table de livraison (3) a un élément de repérage (18) qui permet de déterminer l'emplacement du chariot (2) et/ou de la table de livraison (3).

12. Système de livraison modulaire selon la revendication 10 ou 11, **caractérisé en ce que** le contrôle (16) est relié à une base de données (17) de manière à pouvoir échanger des signaux.

13. Utilisation du système de livraison modulaire selon une des revendications précédentes pour délivrer des échantillons refroidis à une pluralité de positions finales (5).
